# EUROPEAN PATENT APPLICATION

(11) **EP 4 447 482 A1**
(43) Date of publication of application: **16.10.2024**
(21) Application number: 22915242.6
(22) Date of filing: 30.12.2022
(51) Int. Cl.: H04Q 11/00, H04L 12/00

(54) **SERVICE SLICE PROCESSING METHOD AND APPARATUS**

(30) Priority: 31.12.2021 CN 202111668112
(71) Applicant: Huawei Technologies Co., Ltd., Shenzhen, Guangdong 518129 (CN)
(72) Inventor: LI, Yue, Shenzhen, Guangdong 518129 (CN); CHEN, Liang, Shenzhen, Guangdong 518129 (CN); LU, Lifeng, Shenzhen, Guangdong 518129 (CN)
(74) Representative: Maiwald GmbH
(86) International application number: PCT/CN2022/144265
(87) International publication number: WO 2023/125995

(57) **Abstract**

Embodiments of this application disclose a service slice processing method and an apparatus. The method includes: performing service identification on a received data packet, and determining that the data packet corresponds to a first service; collecting at least one quality assessment parameter for the first service, and modifying an initial first SLA parameter based on the collected quality assessment parameter; associating a modified first SLA parameter with the first service; sending the modified first SLA parameter to an ONT, so that the ONT sends and/or receives data of the first service based on the modified first SLA parameter; and reconfiguring a network parameter by using the SLA parameter for the service slice based on the collected quality assessment parameter, so that the modified SLA parameter better meets an actual service slice transmission requirement, a terminal configuration is optimized, and network resources are properly allocated. This avoids resource waste and ensuring normal service operation.

## Description

This application claims priority to Chinese Patent Application No. 202111668112.0, filed with the Chinese National Intellectual Property Administration on December 31, 2021 and entitled "SERVICE SLICE PROCESSING METHOD AND APPARATUS", which is incorporated herein by reference in its entirety.

### TECHNICAL FIELD

This application relates to the communication field, and in particular, to a service slice processing method and an apparatus.

### BACKGROUND

With the development of various broadband value-added services such as online live broadcast, government and enterprise dedicated line, safe city, remote education, and real-time video conference, a requirement for a number of slices of high-quality broadband experience is increasing, and a requirement for an OLT slice has emerged for an optical line terminal (optical line terminal, OLT) to carry services with different requirements. Slicing is dividing an operator's physical network into a plurality of logical networks to achieve a plurality of purposes with one network. Slicing enables the operator to construct a plurality of dedicated, virtual, isolated, and customized logical networks on a physical network to meet different requirements of applications of customers in different industries on a network capability (such as a delay, bandwidth, packet loss, and a number of connections). However, since a physical connection may carry out different services at different time stages, the slice configured for the physical line cannot remain unchanged. How to appropriately and dynamically adjust a parameter of the slice becomes an urgent problem to be resolved for the OLT device.

### SUMMARY

Embodiments of this application provide a service slice processing method and an apparatus, to meet an actual service slice transmission requirement and optimize a terminal configuration.

According to a first aspect, an embodiment of this application provides a service slice processing method, including:
after receiving a data packet, performing service identification on the received data packet, and determining that the data packet is a data packet belonging to a first service; for the first service, collecting at least one quality assessment parameter of operation of the service, where the quality assessment parameter is a parameter reflecting quality of service during operation of the service on a terminal side; modifying an initial first SLA parameter based on the collected quality assessment parameter; using a modified first SLA parameter as a first service guidance parameter; and sending the modified first SLA parameter to an ONT, so that the ONT sends and/or receives data of the first service based on the modified first SLA parameter.

In this embodiment, after services to which various data packets in traffic data belong are identified, an SLA parameter for the service slice is modified based on the collected quality assessment parameter, and an OLT and/or the ONT reconfigures a corresponding network parameter, so that the modified SLA parameter better meets an actual service slice transmission requirement, a terminal configuration is optimized, and network resources are properly allocated. This avoids resource waste and ensuring normal service operation.

In a possible implementation, the method further includes: sending a QoS parameter template associated with the modified first SLA parameter to the ONT.

In another possible implementation, the method further includes: The service identification is determining, based on one or more items of quintuple information included in the data packet or based on a protocol identifier carried in the data packet, whether the data packet belongs to a target service.

In another possible implementation, the method further includes: The quality assessment parameter includes one or more items of feedback information of a user for a service experience of the service during a period of time, service quality data reported by the terminal, and network quality data.

In another possible implementation, the method further includes:
determining that another data packet belongs to a second service, and modifying, based on at least one collected quality assessment parameter for the second service, an initial second SLA parameter for sending the second service, to obtain a modified second SLA parameter; and
adjusting at least one of the modified first SLA parameter and the modified second SLA parameter based on at least one of a network capacity or a service priority, to ensure that a total capability requirement does not exceed a device capability of the OLT.

According to a second aspect, an embodiment of this application further provides an optical line terminal OLT, including a transceiver, a service identification module, a quality information collection module, and an SLA parameter update module, where the transceiver is configured to receive a data packet;
the service identification module is configured to: perform service identification on the received data packet, and determine that the data packet corresponds to a first service, where the data packet is transmitted based on an initial first SLA parameter;
the quality information collection module is configured to collect at least one quality assessment parameter for the first service, where the quality assessment parameter is a parameter reflecting quality of service during operation of the service on a terminal side;
the SLA parameter update module is configured to: modify the initial first SLA parameter based on the collected quality assessment parameter; and associate the modified first SLA parameter with the first service; and
the transceiver is further configured to send the modified first SLA parameter to an ONT, so that the ONT sends and/or receives data of the first service based on the modified first SLA parameter.

In a possible implementation, the transceiver is further configured to send a QoS parameter template associated with the modified first SLA parameter to the ONT.

In another possible implementation, the service identification module determines, based on one or more items of quintuple information included in the data packet or based on a protocol identifier carried in the data packet, whether the data packet belongs to a target service.

In another possible implementation, the quality assessment parameter includes one or more of user's feedback information for service experience of the service during a period of time, service quality data reported by the terminal, and network quality data.

In another possible implementation, the method further includes:
the service identification module is further configured to determine that another data packet belongs to the second service;
the quality information collection module is further configured to collect at least one quality assessment parameter for the second service;
the SLA parameter update module is further configured to: modify the initial second SLA parameter based on the collected quality assessment parameter; and associate a modified second SLA parameter with the second service;
the transceiver is further configured to send the modified second SLA parameter to the ONT, so that the ONT sends and/or receives data of the second service based on the modified second SLA parameter; and
the SLA parameter update module is further configured to adjust at least one of the modified first SLA parameter and the modified second SLA parameter based on at least one of a network capacity or a service priority, to ensure that a total capability requirement does not exceed a device capability of the OLT.

In another possible implementation, the SLA parameter update module is further configured to adjust a local parameter of the OLT based on the modified first SLA parameter.

According to a third aspect, an embodiment of this application further provides an optical line terminal OLT, including a processor, a memory, and a transceiver, where the memory stores instructions and data, and the processor is configured to: execute the instructions, and collaborate with the memory and the transceiver to perform the foregoing method.

### BRIEF DESCRIPTION OF DRAWINGS

FIG. 1 is a schematic diagram of a structure of an optical fiber communication system;
FIG. 2 is a schematic flowchart of a service slice processing method according to an embodiment of the present invention;
FIG. 3 is a schematic flowchart of another service slice processing method according to an embodiment of the present invention;
FIG. 4 is a schematic diagram of a structure of an OLT according to an embodiment of the present invention; and
FIG. 5 is a schematic diagram of a structure of another OLT according to an embodiment of the present invention.

### DESCRIPTION OF EMBODIMENTS

In the specification, claims, and accompanying drawings of this application, the terms "first", "second", "third", "fourth", and the like (if any) are intended to distinguish between similar objects, but do not necessarily indicate a specific order or sequence. It should be understood that data termed in such a way are interchangeable in proper cases, so that embodiments of this application described herein can be implemented in orders other than the order illustrated or described herein. In addition, the terms "include" and "have" and any other variants thereof are intended to cover a non-exclusive inclusion. For example, a process, method, system, product, or device that includes a list of steps or units is not limited to those expressly listed steps or units, but may include other steps or units not expressly listed or inherent to such a process, method, product, or device.

The following describes technical solutions of this application with reference to the accompanying drawings.

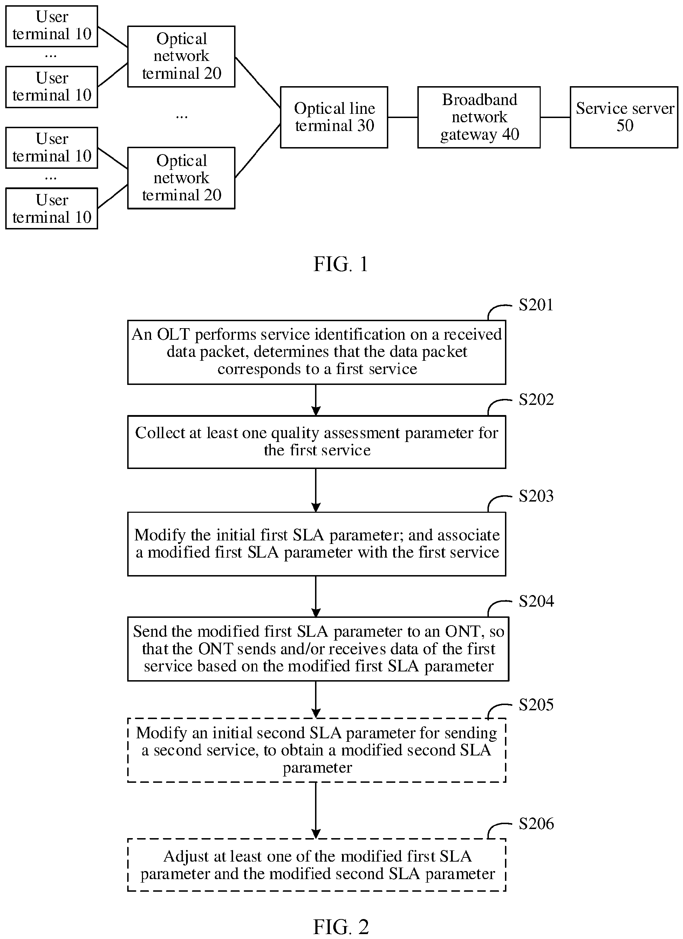

A data forwarding method in this application may be applied to an optical fiber communication system. FIG. 1 is a schematic diagram of an optical fiber communication system. Refer to FIG. 1. The optical fiber communication system may include a user terminal 10, an optical network terminal (optical network terminal, ONT) 20, an optical line terminal (optical line terminal, OLT) 30, a broadband network gateway (broadband network gateway, BNG) 40, a service server 50, and the like. It should be noted that FIG. 1 is merely an example, and in some networks, the BNG 40 may not be disposed between the OLT 30 and the server 50.

The OLT 30 may also be referred to as a central office device, and may manage a plurality of ONTs 20 in a unified manner. The OLT 30 may serve as a medium between the ONT 20 and an upper layer network (namely, a convergence layer), forward data received from the upper layer network to the ONT 20 as downlink data, and forward uplink data received from the ONT 20 to the upper layer network. The OLT 30 is connected to a plurality of ONTs 20 in a point to multi-point manner through an optical distribution network (not shown in the figure).

The ONT 20 may be disposed at a user side location (such as a customer premise) in a distributed manner. The ONT 20 may be a network device used to communicate with the OLT 30 and a user, and may provide a broadband voice, data, video, or other services for the user. Specifically, the ONT 20 may serve as a medium between the OLT 30 and the user terminal 10. In an uplink direction, the user terminal 10 sends information such as service information or user information to the ONT 20. The ONT 20 sends the foregoing information to the OLT 30, the OLT 30 classifies the foregoing information according to a service type, and then sends the information to various service servers 50 through the BNG 40. The service server 50 may provide one or more services, such as a video service, an audio service, a real-time communication service, and a batch transmission service. In a downlink direction, after converging various service data, the OLT 30 schedules the service data and sends the service data to the ONT 20, and the ONT 20 sends the service data to the user terminal 10. It should be noted that the optical network terminal ONT is also referred to as an optical network unit (optical network unit, ONU) in some scenarios. Therefore, in the solutions provided in this application document, the two concepts of the optical network unit and the optical network terminal are interchangeable.

In addition to converging and forwarding the service data, the OLT may also implement device-based network element management and service-based security management and configuration management. In addition to monitoring and managing the device and a port, the OLT may also perform service activating and user status monitoring. In addition, the OLT may allocate bandwidth based on quality of service (quality of service, QoS) or service level agreement (service level agreement, SLA) parameter requirements of different users, manage the ONT and measure a distance of the ONT; and an actual network parameter is not higher than a SLA parameter activated by a user. To distinguish concepts, the SLA parameter committed by a service provider or a broadband provider to a user when the user opens a service is referred to as a committed SLA parameter, and the SLA parameter actually used in the network is referred to as an actual SLA parameter, where the actual SLA parameter generally does not exceed the committed SLA parameter. Unless otherwise specified in the following, the SLA parameter generally means the actual SLA parameter. During a service provision process, the actual SLA parameter may remain unchanged or may change. If the actual SLA parameter changes, the actual SLA parameter at the beginning of the service is also referred to as an initial SLA parameter. Besides the OLT 30, the BNG 40 may also be used for bandwidth control. The user terminal 10 may also be referred to as a terminal device, a terminal, user equipment, an electronic device, or the like. The user terminal 10 may be specifically a digital television, a personal computer, a mobile phone, a tablet personal computer, a virtual reality (virtual reality, VR) device, or the like.

The user terminal 10 communicates with the service server 50 through uplink and downlink data channels. Since different service data of a user that needs to be transmitted by the user terminal 10 has different requirements on performance of the data channels, if the data is transmitted on the same channel without being distinguished, transmission quality requirements of some services may not be met or resources may be wasted. For example, in data of a user, a first type of service data requires a delay of less than 20 milliseconds, and a second type of service data requires a delay of less than 80 milliseconds. However, the two types of data are transmitted through a same data channel. If the data channel can only meet an indicator of less than 80 milliseconds, the requirement of the first type of service cannot be met. On the contrary, if the data channel can only meet an indicator of less than 20 milliseconds, the transmission of the second type of service data in the data channel is wasteful, and the data channel is not fully utilized. Taking a video service as an example, the video service includes sub-services such as a VR service, a high-definition video live broadcast service, and an Internet Protocol Television (IPTV) service. In comparison with the IPTV service, the VR service requires a lower delay. According to the foregoing method, VR service traffic and IPTV service traffic are scheduled together. If the scheduling is based on a principle of choosing the lowest standard, only a quality of service requirement of the IPTV is met, and a quality of service requirement (for example, a delay requirement) of the VR service cannot be met. Similarly, if high-definition video live broadcast service traffic and IPTV service traffic are scheduled together, a delay requirement of the high-definition video live broadcast service is difficult to meet. If a principle of choosing the highest standard is used, to be specific, the scheduling is performed based on the highest delay requirement, network resources cannot be fully utilized.

Therefore, a service slice technology is proposed. A slice is also referred to as a network slice, and all network slices have same or similar service types or service indicator requirements. For example, a network slice may be created for the virtual reality service, or a network slice may be created for the high-definition video live broadcast service, and then a corresponding transmission resource and a corresponding configuration parameter are allocated based on the created network slice. In this way, user traffic is differentiated at a smaller granularity based on different services, and separately matches a respective transmission resource and configuration parameter for transmission to meet a respective service indicator requirement. However, how to configure an accurate configuration parameter for a slice is a challenge.

Embodiments of the present invention provide a service slice processing method. The method may be applied to an OLT device, and can obtain a precise configuration parameter for a service of a slice, and then send the parameter to an ONT for configuration, to provide a better service. As shown in FIG. 2, the data transmission method may include the following steps:
Step 201: An OLT performs service identification on a received data packet, determines that the data packet corresponds to a first service, where the data packet is transmitted based on an initial first SLA parameter;

As an optional embodiment, a service type (a target service for short below) to which the data packet belongs may be identified through a service identifier in the data packet; or whether a downlink message belongs to a target service may be determined based on one or more items of quintuple information included in the data packet. The quintuple information includes: a source Internet Protocol (Internet Protocol, IP) address, a source port, a destination IP address, a destination port, and a transport layer protocol. For example, the OLT stores a server IP address list of a specific service (for example, a video service), and when a source IP address of a downlink data packet is a server IP address of the target service, the downlink data packet is a target service packet. In another example, the OLT stores a protocol identifier corresponding to the target service. When the downlink data packet carries the protocol identifier, it is determined that the downlink data packet is the target service packet. Similarly, a data packet in an uplink data direction may also be identified by using the same method.

Step 202: Collect at least one quality assessment parameter for the first service.

The quality assessment parameter is a parameter reflecting quality of service in a process of presentation composition of a service on a terminal side, and may be key performance indicator (Key Performance Indicator, KPI) data on a service transmission path, including a device KPI reflecting a service capability of a network device, a network KPI reflecting network path quality, and a user KPI reflecting a service operation quality on the terminal side. In an optional embodiment, at least one of the following may be collected: collecting a user's feedback information for a service experience of the service during a period of time; summarizing service quality data, such as a number of lag times, actively reported by the terminal; or summarizing network quality data, such as a packet loss rate and a signal-to-noise ratio.

Step 203: Modify the initial first SLA parameter according to the collected quality assessment parameter, and associate the modified first SLA parameter with the first service.

Specifically, the OLT reversely adjusts the SLA parameter of the service based on the at least one collected quality assessment parameter. For example, for a video service, a collected quality assessment parameter shows that a delay is large and a packet loss is serious. This indicates that a current SLA parameter cannot well ensure development of the video service. Therefore, the current SLA parameter needs to be modified, and a bandwidth size in the SLA parameter and/or a retransmission ratio may be increased. For a game service, a collected quality assessment parameter shows that a delay is 10 ms. However, smooth running of the game service only needs to be within 50 m. In this case, the current SLA parameter may be modified by reducing a bandwidth in the SLA parameter. The quality assessment parameter may be collected after modification, and modification is performed again based on a quality assessment coefficient; and a SLA parameter that is most suitable for the target service is achieved through a plurality of iterations. By the end of this step, the OLT completes quality assessment of the user service, and determines the first SLA parameter value that needs to be modified.

Further, the method further includes step 204: The OLT sends the modified first SLA parameter to the ONT, so that the ONT sends and/or receives data of the first service based on the modified first SLA parameter.

The ONT may use the modified first SLA parameter as a reference, and adjust a corresponding parameter according to a direction in which the SLA parameter changes. Optionally, the OLT adjusts a local parameter based on the modified first SLA parameter. Further, the OLT may further send a specific QoS parameter template associated with the modified first SLA parameter to the ONT.

In this method embodiment, after services to which various data packets in traffic data belong are identified, an SLA parameter is modified for the service slice based on the collected quality assessment parameter, and the OLT and/or the ONT reconfigures a corresponding network parameter, so that the modified SLA parameter better meets an actual service slice transmission requirement, a terminal configuration is optimized, and a network resource is properly allocated. This avoids resource waste and ensuring normal service operation. Further, a service provider or a broadband operator may determine a bandwidth requirement range of a user according to a user's actual SLA parameter data in a plurality of cycles, and provide a reasonable suggestion on a consumption package of the user; or determine, based on actual SLA parameter data of a plurality of users, whether a device capacity in an existing network is sufficient, to reasonably plan a future network and set more reasonable committed SLA parameter data.

The foregoing describes how the OLT modifies an SLA parameter of a single service from a perspective of optimal network resource utilization. However, the OLT generally has a plurality of types of service data. Since the OLT device has a maximum capability limit, if the best transmission indicator is ensured for all services, the transmission indicator may exceed an upper limit of the OLT capability; alternatively, although the OLT is within a theoretical capability of the OLT, an actual capability is insufficient due to poor network quality. In this case, a plurality of services need to be considered as a whole instead of only considering a single service.

Therefore, the service slice processing method may further include the following steps: Step 205: The OLT determines that another data packet belongs to a second service, and modifies, based on at least one collected quality assessment parameter for the second service, an initial second SLA parameter for sending the second service, to obtain a modified second SLA parameter.

Step 206: Adjust at least one of the modified first SLA parameter and the modified second SLA parameter based on at least one of a network capacity or a service priority, to ensure that a total capability requirement does not exceed a device capability of the OLT.

It should be noted that, although only the first service and the second service are mentioned above, a quantity of types of service flows that are received and sent on the OLT are not limited to two. When there are more than two types of service flows on the OLT, the second service in step 205 is a collection concept, and includes all services other than the first service, and the second SLA parameter includes SLA parameters corresponding to all the services other than the first service. The total capability requirement is a theoretical capability requirement of all services provided by the OLT.

For example, the OLT currently provides three types of services: a video conference service, an Internet high-definition television service, and a game service. If the three types of services are all ensured to be set to optimal configurations, a total bandwidth that can be provided by the OLT is exceeded, then based on various indicators such as priorities of the three types of services or sensitivity of the services to the bandwidth, an SLA parameter of a service with a low priority or low sensitivity to the bandwidth may be not set to the optimal configuration, but retained to a sub-optimal configuration. For example, a SLA parameter of the Internet high-definition television service is lowered.

Step 207: Send the at least one of the first SLA parameter and the second SLA parameter to the ONT, so that the ONT sends and/or receives service data based on the adjusted at least one of the first SLA parameter and the second SLA parameter.

In this way, each service may manage all services in an overall manner within a capability range of the OLT, and configure reasonable parameters for all services as much as possible, to meet quality requirements of all services. When the OLT capability range is exceeded, a situation of only focusing on some services and ignoring optimization of actual SLAs of other services can be avoided.

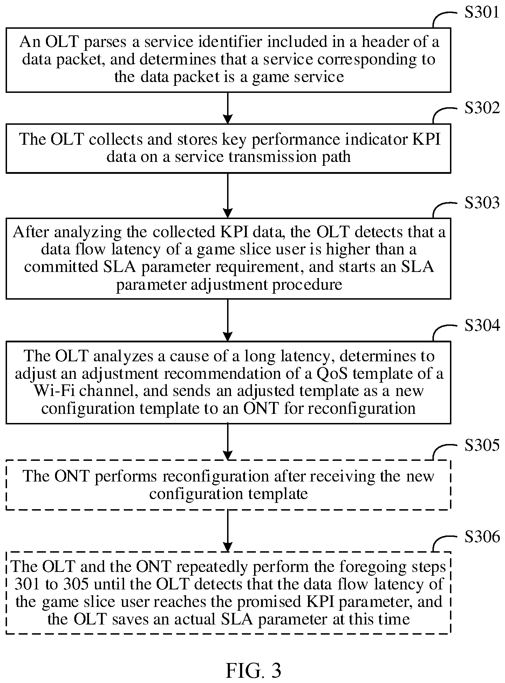

The following uses a game service slice as an example to describe a processing method in a downlink direction. The same applies to an uplink direction. After the user terminal accesses a game server, the game server sends a data packet of a game service to the user terminal. A header of the data packet is set to include an identifier of the game service. As shown in FIG. 3, a post-processing step includes the following steps:
Step 301: The OLT receives a data packet from an upper layer network, parses a service identifier included in a header of the data packet, and determines that a service corresponding to the data packet is a game service.
Step 302: The OLT collects and stores key performance indicator KPI data on a service transmission path. For example, KPI data closely related to a game service includes at least a delay size, and KPI data closely related to a video service includes at least statuses of freezing and screen artifacts. For example, the network KPI data is shown in Table 1 below, and may include a GET (GET) message response success rate of a hypertext transfer protocol (Hypertext Transfer Protocol, HTTP), a success rate and response duration of link setup of a transmission control protocol (Transmission Control Protocol, TCP), uplink and downlink rates of a UDP, and the like. More information is shown in the table below.

Duration of collecting the KPI data by the OLT may be set based on a size of a local storage or a cloud storage space. For example, the local storage or the cloud storage space may store network KPI data of a maximum of 30 minutes. Since this example is for a game service slice, the OLT may collect delay data of the user KPI within at least twenty minutes, and may also further collect the device KPI and the network KPI data.

**Table 1**

| | | |
|---|---|---|
| User KPI | Video | Number of lag times/lag duration |
| | | Number of screen artifacts/screen artifact duration |
| | | Buffer duration |
| | | Code rate |
| | Online game | Delay |
| | Online education/office | Number of lag times/lag duration |
| Device KPI | Network data | Packet loss number/rate |
| | | Uplink and downlink rates |
| | | Forwarding queue length |
| | | Bit error rate |
| | | Optical power |
| | | Alarm number |
| Network KPI | HTTP | GET response success rate |
| | TCP | Success rate of link setup |
| | | Response duration of link setup |
| | | Packet loss and retransmission |
| | | Uplink and downlink delays |
| | | Uplink and downlink rates |
| | UDP | Uplink and downlink rates |

Step 303: After analyzing the collected KPI data, the OLT detects that a data flow delay of a game slice user exceeds 100 ms for 5 consecutive minutes. However, a delay range required by the committed SLA parameter is 0 ms to 50 ms. In this case, an actual SLA parameter adjustment procedure of the game service slice is started.

Step 304: The OLT further analyzes a cause of a long delay based on the collected network KPI, determines that the long delay is "caused by increased Wi-Fi interference", determines to adjust an adjustment recommendation of a QoS template of a Wi-Fi channel to reduce a specific parameter, such as a channel width and a transmit power, of the data flow delay, and sends the adjusted template as a new configuration template to the ONT for reconfiguration, where the new configuration template includes Wi-Fi channel adjustment indication information. As an implementation, the OLT may calculate a value of a parameter by using an AI algorithm model trained offline.

Step 305: After receiving the new configuration template, the ONT automatically scans a channel of the neighbor access point (access point, AP) based on the Wi-Fi channel adjustment indication information, and finds that the ONT is in the 2.4G frequency band #6 channel in the 2.4G frequency band and shares a same channel with a plurality of surrounding neighbors, causing severe co-channel interference. Therefore, the ONT avoids channels in a surrounding area and adjusts the ONT channel to # 13 channel to continue sending and receiving game service packets.

Step 306: The OLT and the ONT repeatedly perform the foregoing steps 301 to 305 until the OLT detects that the data flow delay of the game slice user basically does not exceed 100 ms, and then the OLT saves an actual SLA parameter as an SLA parameter of the game slice user, to be used for providing a game service for the game slice user subsequently.

By using this implementation solution, this solution monitors and optimizes the actual SLA parameter based on an actual use effect of the game slice user, thereby optimizing service experience; and avoiding a case in which a service provider sets a fixed network parameter only based on a committed SLA parameter to provide a service for a user, without considering an actual network environment, leading to poor user experience and the user's questioning about the committed SLA parameter of the operator.

Further, when the OLT optimizes the actual SLA parameter of the game slice user, and finds that an actual SLA parameter of another high-definition video slice user also needs to be optimized, if the actual SLA parameters of the two users are both optimized, a total service capability may exceed a maximum theoretical capability provided by the OLT. In this way, based on various indicators such as priorities of the two services or sensitivities of the services to bandwidth, the actual SLA parameter of the network HD video service slice may be set to a smaller value. Then, the new actual SLA parameter is sent to the ONT of the high-definition video slice user for a configuration update.

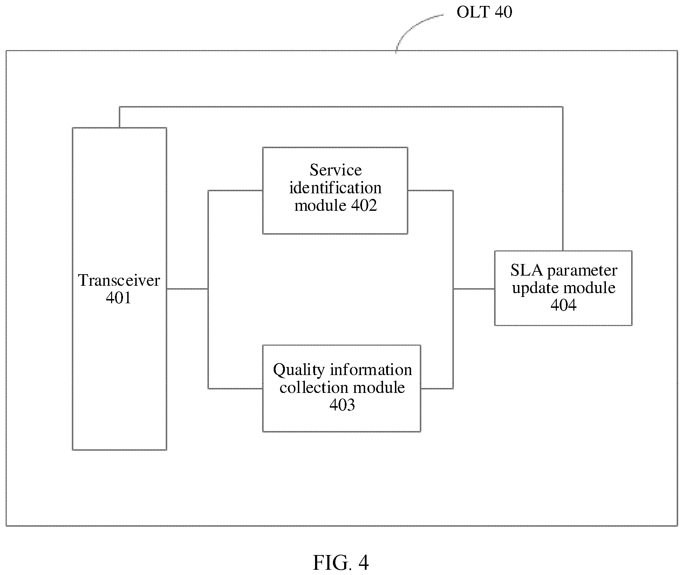

An embodiment of the present invention provides an OLT 40. As shown in FIG. 4, the OLT 40 includes a transceiver 401, a service identification module 402, a quality information collection module 403, and an SLA parameter update module 404.

The transceiver 401 is configured to receive a data packet.

The service identification module 402 is configured to perform service identification on the received data packet, and determine that the data packet corresponds to a first service, where the data packet is transmitted based on an initial first SLA parameter.

The quality information collection module 403 is configured to collect at least one quality assessment parameter for the first service.

The SLA parameter update module 404 is configured to: modify the initial first SLA parameter based on the collected quality assessment parameter, and associate a modified first SLA parameter with the first service.

The transceiver 401 is further configured to send the modified first SLA parameter to an ONT, so that the ONT sends and/or receives data of the first service based on the modified first SLA parameter.

Optionally, the transceiver 401 is further configured to send a QoS parameter template associated with the modified first SLA parameter to the ONT.

Further, the service identification module 402 is further configured to identify a data packet of a second service; the quality information collection module 403 is further configured to collect at least one quality assessment parameter for the second service; and the SLA parameter update module 404 is further configured to: modify an initial second SLA parameter for sending the second service to obtain a modified second SLA parameter, and adjust at least one of the modified first SLA parameter and the modified second SLA parameter based on at least one of a network capacity or a service priority.

The SLA parameter update module 404 is further configured to adjust a local parameter of the OLT based on the modified first SLA parameter.

Specifically, the service identification module 402 determines, based on one or more items of quintuple information included in the data packet or based on a protocol identifier carried in the data packet, whether the data packet of the first service or the data packet of the second service belongs to a target service.

Further, the service identification module 402 is further configured to identify a data packet of a second service; the quality information collection module 403 is further configured to collect at least one quality assessment parameter for the second service; and the SLA parameter update module 404 is further configured to: modify an initial second SLA parameter for sending the second service to obtain a modified second SLA parameter, and adjust at least one of the modified first SLA parameter and the modified second SLA parameter based on at least one of a network capacity or a service priority.

Further, the service identification module 402 is further configured to determine that another data packet belongs to the second service.

The quality information collection module 403 is further configured to collect at least one quality assessment parameter for the second service.

The SLA parameter update module 404 is further configured to: modify an initial second SLA parameter based on the collected quality assessment parameter; and associate a modified second SLA parameter with the second service.

The transceiver 401 is further configured to send the modified second SLA parameter to the ONT, so that the ONT sends and/or receives data of the second service based on the modified second SLA parameter.

The SLA parameter update module 404 is further configured to: adjust at least one of the modified first SLA parameter and the modified second SLA parameter based on at least one of the network capacity or the service priority, to ensure that a total capability requirement does not exceed a device capability of the OLT; and send the adjusted first SLA parameter or the adjusted second SLA parameter to the ONT.

Further, the modules in the OLT in this embodiment may further execute the steps in FIG. 3 and FIG. 4 in collaboration, and details are not described herein again.

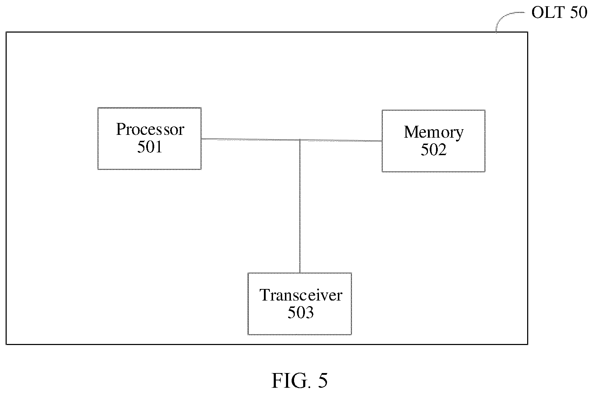

FIG. 5 is a schematic diagram of a structure of another OLT 50 according to an embodiment of this application. As shown in FIG. 5, the OLT 50 includes a processor 501, a memory 502, and a transceiver 503. The processor 501 may be configured to: process a communication protocol and communication data, control a communication apparatus, execute a software program, process data of the software program, and the like. The memory 502 may be configured to store instructions (or referred to as a program) and data. There may be a plurality of processors 501, and the memory 502 coupled to the processor may be independent of the processor or the OLT, or may be in the processor 501 or the OLT. The memory 502 may be a physically independent unit, or may be storage space, a network hard disk, or the like on a cloud server. Optionally, there may be one or more memories 502. When there are a plurality of memories, the plurality of memories may be located at a same location or different locations, and may be used independently or in combination. The processor 501 executes the computer instructions stored in the memory 502, and cooperates with the transceiver 503 and the memory 502 to execute the following method:
receiving a data packet;
performing service identification on the received data packet, and determining that the data packet corresponds to a first service, where the data packet is transmitted based on an initial first SLA parameter;
collecting at least one quality assessment parameter for the first service;
modifying the initial first SLA parameter based on the collected quality assessment parameter; and associating the modified first SLA parameter with the first service; and
sending the modified first SLA parameter to an ONT, so that the ONT sends and/or receives data of the first service based on the modified first SLA parameter.

Further, the following steps are executed:
identifying a data packet of a second service;
collecting at least one quality assessment parameter of the second service; and
modifying an initial second SLA parameter for sending the second service, to obtain a modified second SLA parameter, and adjusting at least one of the modified first SLA parameter and the modified second SLA parameter based on at least one of a network capacity or a service priority.

It may be understood that, the processor in embodiments of this application may be a central processing unit (central processing unit, CPU), and may alternatively be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. This is implemented by the processor by executing software instructions. The software instructions may include corresponding software modules. The software modules may be stored in a random access memory (random access memory, RAM), a flash memory, a read-only memory (read-only memory, ROM), a programmable read-only memory (programmable rom, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well known in the art.

It should be understood that computer program instructions may be used to implement each process and/or each block in a flowchart and/or a block diagram and a combination of processes and/or blocks in the flowchart and/or the block diagram. The computer program instructions may be provided for a general-purpose computer, a special computer, an embedded processor, or a processor of another programmable data processing device to generate a machine, so that instructions executed by a computer or a processor of another programmable data processing device generates an apparatus for implementing a specific function in one or more processes in the flowchart and/or in one or more blocks in the block diagram.

These computer program instructions may alternatively be stored in a computer-readable memory that can instruct the computer or any other programmable data processing device to work in a specific manner, so that the instructions stored in the computer-readable memory generate a manufactured product that includes an instruction apparatus. The instruction apparatus implements a specific function in one or more processes in the flowchart and/or in one or more blocks in the block diagram.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowchart and/or in one or more blocks in the block diagram.

Finally, it should be noted that: the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service slice processing method, comprising:
receiving a data packet;
performing service identification on the received data packet, and determining that the data packet corresponds to a first service, wherein the data packet is transmitted based on an initial first SLA parameter;
collecting at least one quality assessment parameter for the first service, wherein the quality assessment parameter is a parameter reflecting quality of service during operation of the service on a terminal side;
modifying the initial first SLA parameter based on the collected quality assessment parameter, and associating the modified first SLA parameter with the first service; and
sending the modified first SLA parameter to an ONT, so that the ONT sends and/or receives data of the first service based on the modified first SLA parameter.

2. The method according to claim 1, further comprising: sending a QoS parameter template associated with the modified first SLA parameter to the ONT.

3. The method according to claim 1 or 2, wherein the service identification is determining, based on one or more items of quintuple information comprised in the data packet or based on a protocol identifier carried in the data packet, whether the data packet belongs to a target service.

4. The method according to claim 1 or 2, wherein the quality assessment parameter comprises a device KPI reflecting a service capability of a network device, a network KPI reflecting network path quality, and a user KPI reflecting service operation quality on the terminal side.

5. The method according to any one of claims 1 to 4, further comprising:
determining that another data packet belongs to a second service, and modifying, based on at least one collected quality assessment parameter for the second service, an initial second SLA parameter for sending the second service, to obtain a modified second SLA parameter; and
adjusting at least one of the modified first SLA parameter and the modified second SLA parameter based on at least one of a network capacity or a service priority, to ensure that a total capability requirement does not exceed a device capability of the OLT.

6. An optical line terminal OLT, comprising a transceiver 401, a service identification module 402, a quality information collection module 403, and an SLA parameter update module 404, wherein
the transceiver 401 is configured to receive a data packet;
the service identification module 402 is configured to: perform service identification on the received data packet, and determine that the data packet corresponds to a first service, wherein the data packet is transmitted based on an initial first SLA parameter;
the quality information collection module 403 is configured to collect at least one quality assessment parameter for the first service, wherein the quality assessment parameter is a parameter reflecting quality of service during operation of the service on a terminal side;
the SLA parameter update module 404 is configured to: modify the initial first SLA parameter based on the collected quality assessment parameter, and associate a modified first SLA parameter with the first service; and
the transceiver 401 is further configured to send the modified first SLA parameter to an ONT, so that the ONT sends and/or receives data of the first service based on the modified first SLA parameter.

7. The OLT according to claim 6, wherein the transceiver 401 is further configured to send a QoS parameter template associated with the modified first SLA parameter to the ONT.

8. The OLT according to claim 6 or 7, wherein the service identification module 402 determines, based on one or more items of quintuple information comprised in the data packet or based on a protocol identifier carried in the data packet, whether the data packet belongs to a target service.

9. The OLT according to claim 6 or 7, wherein the quality assessment parameter comprises a device KPI reflecting a service capability of a network device, a network KPI reflecting network path quality, and a user KPI reflecting service operation quality on the terminal side.

10. The OLT according to any one of claims 6 to 9, wherein the method further comprises:
the service identification module 402 is further configured to determine that another data packet belongs to a second service,
the quality information collection module 403 is further configured to collect at least one quality assessment parameter for the second service;
the SLA parameter update module 404 is further configured to: modify an initial second SLA parameter based on the collected quality assessment parameter; and associate a modified second SLA parameter with the second service;
the transceiver 401 is further configured to send the modified second SLA parameter to the ONT, so that the ONT sends and/or receives data of the second service based on the modified second SLA parameter; and
the SLA parameter update module 404 is further configured to adjust at least one of the modified first SLA parameter and the modified second SLA parameter based on at least one of a network capacity or a service priority, to ensure that a total capability requirement does not exceed a device capability of the OLT.

11. The OLT according to any one of claims 6 to 10, wherein the SLA parameter update module 404 is further configured to adjust a local parameter of the OLT based on the modified first SLA parameter.

12. An optical line terminal OLT, comprising a processor 501, a memory 502, and a transceiver 503, wherein the memory 502 stores instructions and data, and the processor 501 is configured to: execute the instructions, and collaborate with the memory 502 and the transceiver 503 to perform the method according to any one of claims 1 to 5.
